# EUROPÄISCHE PATENTSCHRIFT

(11) **EP 0 750 143 B1**
(45) Veröffentlichungstag und Bekanntmachung des Hinweises auf die Patenterteilung: **24.03.1999**
(21) Anmeldenummer: 96109433.1
(22) Anmeldetag: 12.06.1996
(51) Int. Cl.: F16K 1/12, B65D 90/62

(54) **Absperreinrichtung für einen Behälter für ein pulverförmiges Medium**
Shut-off device for a bulk container
Dispositif d'obturation pour un récipient pour matières en vrac

(30) Priorität: 20.06.1995 DE 19522360
(43) Veröffentlichungstag der Anmeldung: 27.12.1996
(73) Patentinhaber: SIEMENS AKTIENGESELLSCHAFT, 80333 München (DE)
(72) Erfinder: Lisson, Johann, Dr., 64291 Darmstadt (DE); Gliha, Viktor, Dipl.-Ing., 63456 Hanau (DE); Schwarz, Horst, Dipl.-Ing., 65207 Wiesbaden (DE); Dingeldein, Falk, 63150 Heusenstamm (DE); Hampel, Michael, 65468 Trebur (DE)

(56) Entgegenhaltungen:
- CH-A- 516 758
- GB-A- 203 876
- US-A- 2 267 057

## Beschreibung

Die Erfindung bezieht sich auf eine Absperreinrichtung für einen Behälter für ein pulverförmiges Medium mit einem in einem Ablaufkanal verschiebbar angeordneten Verschlußstück. Eine derartige Absperreinrichtung, deren Ablaufkanal einen ersten, im Längsschnitt runden Bereich umfaßt, ist aus der GB-PS 203 876 bekannt.

Im Verlauf eines Herstellungsprozesses einer chemischen Verbindung, z. B. eines Sintermaterials, können zahlreiche Transport- oder andere Verfahrensschritte notwendig sein, bei denen ein Umfüllen eines pulverförmigen Mediums von einem Behälter in einen anderen Behälter erforderlich ist. Je nach Art des pulverförmigen Mediums kann es dabei von besonderer Wichtigkeit sein, eine kontrollierte Behandlung des Mediums zu gewährleisten. Dies ist beispielsweise bei einem toxischen, radioaktiven oder besonders wertvollen Medium der Fall. Dazu muß neben einem unbeabsichtigten Verlust von Medium vor oder bei dem Umfüllvorgang auch eine Rückstandsbildung von Partikeln des Mediums in dem zu entleerenden Behälter vermieden sein, die beispielsweise auf ein Anhaften von Partikeln des Mediums an den Innenwänden des zu entleerenden Behälters sowie auf eine Brückenbildung zwischen Partikeln des Mediums zurückgeführt werden kann. Für einen kontrollierten Umgang mit dem pulverförmigen Medium ist es zudem erforderlich, daß die Menge des aus dem Behälter abgelassenen Mediums durch eine Dosierung genau eingestellt werden kann.

Der Erfindung liegt daher die Aufgabe zugrunde, eine Absperreinrichtung für einen Behälter für ein pulverförmiges Medium anzugeben, durch die in geschlossenem Zustand ein Austreten des pulverförmigen Mediums aus dem Behälter und somit ein Verlust des Mediums sicher vermieden ist. Außerdem soll die Absperreinrichtung in geöffnetem Zustand ein dosiertes und rückstandsfreies Entleeren des Mediums aus dem Behälter ermöglichen.

Diese Aufgabe wird für eine Absperreinrichtung der obengenannten Art erfindungsgemäß gelost, indem der Ablaufkanal einen ersten, im Längsschnitt runden Bereich und einen darunterliegenden zweiten, konisch ausgebildeten Bereich umfaßt.

Durch den ersten im Längsschnitt runden Bereich des Ablaufkanals ist erreicht, daß sich beim Öffnen des Absperrorgans durch eine Verschiebung des Verschlußstücks in den Ablaufkanal hinein der Abflußquerschnitt für das pulverförmige Medium schnell vergrößert. Dadurch gerät das pulverförmige Medium beim Öffnen des Absperrorgans schnell und sicher in eine Fließbewegung, so daß durch einen Mitnahme'effekt ein Anhaften des pulverförmigen Mediums an der Innenwand des Behälters oder des Ablaufkanals sowie auch eine Brückenbildung und somit eine Verklumpung des pulverförmigen Mediums vermieden sind. Der erste, im Längsschnitt runde Bereich des Ablaufkanals erfüllt also die Funktion eines Beschleunigungsbereichs.

Durch eine weitere Verschiebung des Verschlußstücks bis in den zweiten, sich konisch verengenden Bereich des Ablaufkanals hinein ist eine kontrollierte Verengung des Abflußquerschnitts für das pulverförmige Medium mit hoher Genauigkeit ermöglicht. Somit ist ein gebremster, aber nicht-stockender Abfluß des pulverförmigen Mediums gewährleistet, so daß der Abfluß des Mediums aus dem Behälter dosierbar ist. Dem zweiten, konisch ausgebildeten Bereich des Ablaufkanals kommt also die Bedeutung eines Dosierbereichs zu.

Um den Materialfluß durch den Ablaufkanal bei geöffneter Adsperreinrichtung zusätzlich zu erleichtern, ist das Verschlußstück vorteilhafterweise an seiner Verschlußkante abgerundet.

In besonders vorteilhafter Ausgestaltung ist der Ablaufkanal Teil des Absperrorgans eines Kugelhahns, der in geschlossenem Zustand eine hohe Dichtigkeit aufweist. Somit sind Verluste an pulverförmigem Medium vor oder nach einem Umfüllvorgang besonders effektiv vermieden. Der Kugelhahn kann dabei eine Absperrarmatur für den zu entleerenden Behälter oder eine Absperrarmatur für den zu befüllenden Behälter sein.

Um eine besonders effektive Steuerung des Verschlußstücks zu gewährleisten, weist das Verschlußstück vorteilhafterweise eine koaxial zum Ablaufkanal angeordnete, innerhalb des zu entleerenden Behälters verlaufende Antriebsstange auf. Diese Antriebsstange ist dabei zweckmäßigerweise derart ausgebildet, daß sie in geschlossenem Zustand der Absperreinrichtung über den auf dem Verschlußstück ruhenden Rand des Ablaufkanals das Gewicht des Behälters trägt, so daß der Behälter besonders dicht und effektiv verschlossen ist. Dazu ist das Verschlußstück vorteilhafterweise kegelförmig ausgebildet.

Um einen besonders effektiven Abfluß des pulverförmigen Mediums durch den Ablaufkanal zu ermöglichen, sind die Außenfläche des Verschlußstücks und die Innenfläche des ersten Bereichs des Ablaufkanals im Längsschnitt zueinander parallel. In geöffnetem Zustand weist die Absperreinrichtung somit einen dem Strömungsprofil des abzuführenden pulverförmigen Mediums angepaßten Längsschnitt auf, so daß ein Ablauf des pulverförmigen Mediums durch den Ablaufkanal hindurch besonders begünstigt ist.

Die mit der Erfindung erzielten Vorteile bestehen insbesondere darin, daß durch den ersten im Längsschnitt runden Bereich und den darunterliegenden zweiten, konisch ausgebildeten Bereich des Ablaufkanals ein rückstandsfreies Entleeren eines Behälters und auch ein gezieltes Dosieren des abgelassenen pulverförmigen Mediums erreichbar ist. In geschlossenem Zustand weist eine derartige Absperreinrichtung eine hohe Dichtigkeit auf, so daß der Behälter sicher verschlossen ist und ein unerwünschter Verlust an pulverförmigem Medium sicher vermieden ist.

Ein Ausführungsbeispiel der Erfindung wird anhand einer Zeichnung näher erläutert. Darin zeigen:
Figur 1 eine geschlossene Absperreinrichtung im Längsschnitt, und
Figur 2 eine geöffnete Absperreinrichtung im Längsschnitt.

Einander entsprechende Teile sind in beiden Figuren mit denselben Bezugszeichen versehen.

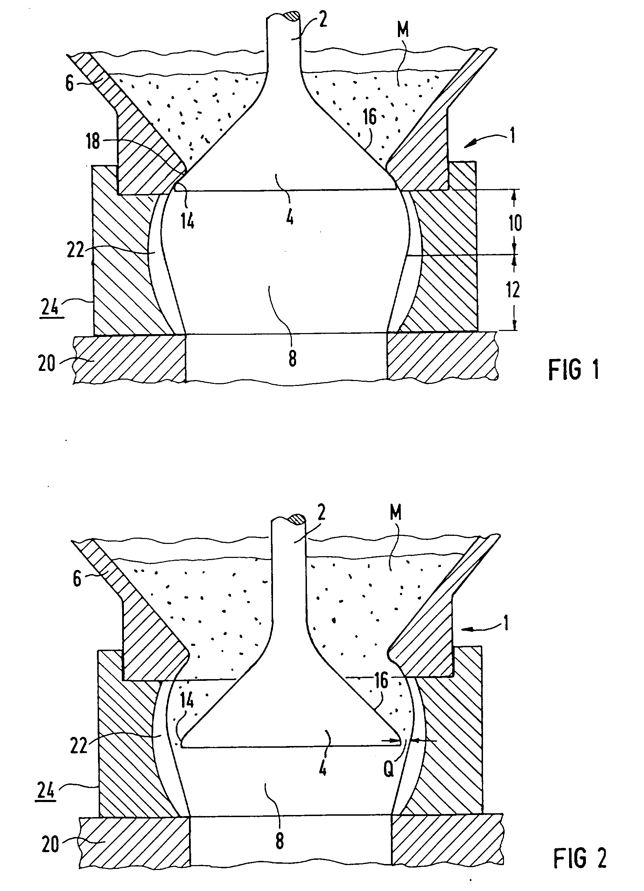

Die Absperreinrichtung 1 gemäß den Figuren 1 und 2 umfaßt ein an einer Antriebstange 2 angeordnetes Verschlußstück 4. Die Antriebstange 2 ist dabei innerhalb eines Behälters 6 angeordnet, in dem sich pulverförmiges Medium M befindet. Das Verschlußstück 4 ist in einem Ablaufkanal 8 verschiebbar angeordnet. Der Ablaufkanal 8 umfaßt einen ersten, im Längsschnitt runden Bereich 10 und einen darunterliegenden zweiten, konisch ausgebildeten Bereich 12. Der erste Bereich 10, d. h. der Eintritts- oder Beschleunigungsbereich, und der zweite Bereich 12, d. h. der Austritts- oder Dosierbereich, sind dabei derart zueinander angeordnet, daß der Ablaufkanal 8 im Längsschnitt etwa herzförmig ausgebildet ist.

Das Verschlußstück 4 ist an seiner Verschlußkante 14 abgerundet und im Bereich seiner Rückenfläche 16 kegelförmig ausgebildet. Die Rückenfläche 16 des Verschlußstücks 4 und die Innenfläche des ersten Bereichs 10 des Ablaufkanals 4 sind dabei im Längsschnitt zueinander parallel.

In geschlossenem Zustand der Absperreinrichtung 1 sitzt der Behälter 6 mit seinem Andockbereich 18 auf dem Verschlußstück 4 auf (Figur 2). Dazu weist der Andockbereich 18 einen geringeren Querschnitt auf als der maximale Querschnitt des Verschlußstücks 4. Die Antriebstange 2 ist dabei derart ausgebildet, daß sie das Gewicht des Verschlußstücks 4, des Behälters 6 und des in diesem befindlichen Mediums M trägt. Auf diese Weise ist der Behälter 6 dicht verschlossen, und ein unbeabsichtigtes Öffnen des Behälters 6 ist vermieden.

Der die Bereiche 10 und 12 umfassende Ablaufkanal 8 ist Teil des Absperrorgans 22 eines Kugelhahns 24. Der Kugelhahn 24 ist dabei fest an einem Andockring 20 eines - nicht dargestellten - zu befüllenden Behälters montiert, so daß der befüllte Behälter durch den Kugelhahn 24 dicht und sicher verschließbar ist. Der Kugelhahn 24 kann alternativ aber auch fest mit dem Behälter 6 verbunden sein, so daß ein dichtes Verschließen des Behälters 6 sicher gewährleistet ist.

Zum Öffnen der Absperreinrichtung 1 wird der Behälter 6 auf den am zu befüllenden Behälter angeordneten Kugelhahn 24 derart aufgesetzt, daß das Verschlußstück 4 in den Ablaufkanal 8 hinein verschiebbar ist. In geöffnetem Zustand der Absperreinrichtung 1 ist das Verschlußstück 4 in den Ablaufkanal 8 hinein verschoben (Figur 2).

Bei der Verschiebung des Verschlußstücks 4 in den ersten Bereich 10 des Ablaufkanals 8 hinein wird der durch die Strecke Q repräsentierte Abflußquerschnitt für das pulverförmige Medium M aufgrund des runden Längsschnitts des Bereichs 10 auch bei einer Verschiebung des Verschlußstücks 4 um ein kleines Wegstuck schnell vergrößert, so daß sich rasch eine Fließbewegung des Mediums M einstellt. Durch Mitnahmeeffekte werden dabei Brückenbildungen oder Verklumpungen des Mediums M vermieden. Somit ist ein rückstandsfreies Entleeren des Mediums M aus dem Behälter 6 ermöglicht. Bei einer weiteren Verschiebung des Verschlußstücks 4 in den Ablaufkanal 8 hinein wird im zweiten konisch abgebildeten Bereich 12 des Ablaufkanals 8 der Abflußquerschnitt Q kontrolliert verringert. Somit ist ein Dosieren des abfließenden Mediums M ermöglicht, ohne daß der Materialfluß ins Stocken gerät, was zu einer Verklumpung und somit zu Rückstandsbildung führen könnte.

## Patentansprüche

1. Absperreinrichtung für einen Behälter für ein pulverförmiges Medium mit einem in einem Ablaufkanal verschiebbar angeordneten Verschlußstück, wobei der Ablaufkanal (8) einen ersten, im Längsschnitt runden Bereich (10) umfaßt,
**dadurch gekennzeichnet**, daß der Ablaufkanal (8) einen unter dem ersten Bereich (10) liegenden zweiten, konisch ausgebildeten Bereich (12) umfaßt.

2. Absperreinrichtung nach Anspruch 1,
**dadurch gekennzeichnet**, daß das Verschlußstück (4) an seiner Verschlußkante (14) abgerundet ist.

3. Absperreinrichtung nach Anspruch 1 oder 2,
**dadurch gekennzeichnet**, daß der Ablaufkanal (8) Teil des Absperrorgans (22) eines Kugelhahns (24) ist.

4. Absperreinrichtung nach einem der Ansprüche 1 bis 3,
**dadurch gekennzeichnet**, daß das Verschlußstück (4) eine koaxial zum Ablaufkanal (8) angeordnete, innerhalb des Behälters (6) verlaufende Antriebsstange (2) aufweist.

5. Absperreinrichtung nach einem der Ansprüche 1 bis 4,
**dadurch gekennzeichnet**, daß das Verschlußstück (4) kegelförmig ausgebildet ist.

6. Absperreinrichtung nach einem der Ansprüche 1 bis 5,
**dadurch gekennzeichnet**, daß das Verschlußstück (4) eine zur Innenfläche des ersten Bereichs (10) des Ablaufkanals (8) im Längsschnitt parallel verlaufende Rückenfläche (16) aufweist.

## Claims

1. Shut-off device for a container for a pulverulent medium, having a sealing piece that is displaceably arranged in an outlet channel, with the outlet channel (8) comprising a first region (10) that is round in longitudinal section, characterised in that the outlet channel (8) comprises a second conically formed region (12) which lies underneath the first region (10).

2. Shut-off device according to claim 1, characterised in that the sealing piece (4) is rounded off at its sealing edge (14).

3. Shut-off device according to claim 1 or 2, characterised in that the outlet channel (8) is part of the shut-off element (22) of a ball valve (24).

4. Shut-off device according to one of claims 1 to 3, characterised in that the sealing piece (4) has a driving rod (2) which is arranged coaxially in relation to the outlet channel (8) and which extends within the container (6).

5. Shut-off device according to one of claims 1 to 4, characterised in that the sealing piece (4) is formed in a conical fashion.

6. Shut-off device according to one of claims 1 to 5, characterised in that the sealing piece (4) has a rear face (16), which in longitudinal section extends parallel to the inner face of the first region (10) of the outlet channel (8).

## Revendications

1. Dispositif d'obturation pour un récipient à matière pulvérulente, comportant un obturateur disposé à déplacement dans un conduit d'évacuation, le conduit (8) d'évacuation comprenant une première région (10), circulaire en coupe longitudinale,caractérisé en ce que le conduit (8) d'évacuation comprend une seconde région (12), de forme conique, située en dessous de la première région (10).

2. Dispositif d'obturation suivant la revendication 1, caractérisé en ce que l'obturateur (4) est arrondi sur son arête (14) d'obturation.

3. Dispositif d'obturation suivant la revendication 1 ou 2, caractérisé en ce que le conduit (8) d'évacuation fait partie de l'organe (22) d'arrêt d'un robinet (24) à boisseau sphérique.

4. Dispositif d'obturation suivant l'une des revendications 1 à 3, caractérisé en ce que l'obturateur (4) comporte une tige (2) d'entraînement, disposée coaxialement au conduit (8) d'évacuation et s'étendant à l'intérieur du récipient (6).

5. Dispositif d'obturation suivant l'une des revendications 1 à 4, caractérisé en ce que l'obturateur (4) est de forme conique.

6. Dispositif d'obturation suivant l'une des revendications 1 à 5, caractérisé en ce que l'obturateur (4) comporte une face (16) arrière s'étendant, en coupe longitudinale, parallèlement à la face intérieure de la première région (10) du conduit (8) d'évacuation.
